# EUROPÄISCHE PATENTANMELDUNG

(11) **EP 2 131 316 A1**
(43) Veröffentlichungstag der Anmeldung: **09.12.2009**
(21) Anmeldenummer: 08011141.2
(22) Anmeldetag: 19.06.2008
(51) Int. Cl.: G06Q 10/00

(54) **Authentifizierungsverfahren und Authentifizierungssystem für Produkte**

(30) Priorität: 05.06.2008 DE 102008026827
(71) Anmelder: freeLINE GmbH, 85386 Eching (DE)
(72) Erfinder: Dr. Heini Hans, 85386 Eching (DE)
(74) Vertreter: DTS München

(57) **Zusammenfassung**

Die Erfindung betrifft ein Authentifizierungssystem (1) zum Überprüfen der Echtheit eines Produktes durch Übermittlung einer dem Produkt zugeordneten Produktzeichenkette, umfassend:
- eine Hersteller-Datenbank (7), die eine in dem Produktzeichenkette enthaltene Herstellerkennung einer Herstellerinformation zuordnet;
- eine Produkt-Datenbank (8), die einen in dem Produktzeichenkette enthaltenen Produktcode und der Herstellerkennung produktspezifische Daten zuordnet,
- eine Authentifizierungseinheit (2), um eine Anfrage mit der Produktzeichenkette von einem Endgerät (3) zu erhalten, um abhängig von der Herstellerkennung und abhängig von dem Produktcode aus der Produkt-Datenbank (8) die dem Produkt zugeordneten produktspezifische Daten zu ermitteln, wobei abhängig von den ermittelten produktspezifischen Daten die Echtheit des Produkts verifizierbar ist.

## Beschreibung

Die Erfindung betrifft ein Authentifizierungsverfahren sowie ein Authentifizierungssystem für Produkte, Packungen und Waren, insbesondere zur Fälschungssicherung, Produktionssteuerung und Wiederverkaufs-Identifizierung. Insbesondere betrifft die Erfindung ein Verfahren, bei dem eine Abfrage mit einem Produktcode in einer oder mehreren Datenbanken vorgenommen wird, um die Echtheit eines dem Produktcode zugeordneten Produktes zu überprüfen.

Die Nachahmung von Waren und Produkten und dergleichen bzw. deren Fälschung ist zu einem großen Problem geworden. Neben enormen Schäden für die Hersteller der Originalprodukte führt dies vor allem bei gesundheits- und sicherheitsrelevanten Produkten wie z.B. Pharmaka oder Ersatzteilen von Flugzeugen oder Autos zu Schäden und Gefahren bei Menschen. Daher sind die Anstrengungen der Unternehmen, ihre Produkte sicher gegen Fälschungen abzugrenzen, sehr hoch.

Bekannt ist, eine Überprüfung der Produkte mithilfe einer Produktauthentifizierung durchzuführen, z.B. anhand einer an dem Produkt angebrachten Produktzeichenkette, die an eine Datenbank übermittelt wird, den Hersteller des Produktes herausfindet und diesen dem Überprüfenden mitteilt. Selbst anspruchsvolle Codierungsverfahren der Produktzeichenketten, die eine Generierung von Produktzeichenketten für einen bestimmten Hersteller erschweren, sind nicht ausreichend sicher, um eine Fälschung von Produktzeichenketten auszuschließen.

Authentifizierungsverfahren, bei denen zu einer Produktzeichenkette lediglich ein Hersteller angegeben wird, können einfach umgangen werden:
1. Es wird ein Scheinunternehmen gegründet, das nun für eine Datenbankabfrage echte Produktkennzeichnungen erzeugt und diese auf gefälschte, das heißt von einem Markenunternehmen kopierte Produkte, aufbringt.
2. Es werden möglichst billige Produkte eines Herstellers aufgekauft. Diese werden vernichtet, deren Produktkennzeichnungen jedoch für gefälschte hochpreisige Produkte desselben Herstellers verwendet.
3. Codierte Produktcodes können entschlüsselt werden, um so Produktcodes zu erzeugen, die den Hersteller des gefälschten Produktes angeben.

Es ist daher notwendig, ein Authentifizierungsverfahren zur Verfügung zu stellen, bei dem neben der Herstellerfirma auch das spezifische Produkt der Herstellerfirma überprüft werden kann.

Weiterhin bestehen Bedenken seitens der Herstellerfirmen ihre Produktkennzeichnungen einer externen Datenbank zur Verfügung zu stellen, da dort die Sicherheit der Daten für die Herstellerfirmen nicht ausreichend schützbar ist.

Es ist daher Aufgabe der vorliegenden Erfindung, ein Authentifizierungsverfahren für Produkte sowie ein Authentifizierungssystem zur Verfügung zu stellen, die sicher sind und bei denen eine zuverlässigere Überprüfung der Echtheit des Produkts möglich ist.

Diese Aufgabe wird durch das Authentifizierungssystem gemäß Anspruch 1 sowie durch das Verfahren zum Überprüfen der Echtheit eines Produkts gemäß dem nebengeordneten Anspruch gelöst.

Vorteilhafte Ausgestaltungen der Erfindung sind in den abhängigen Ansprüchen angegeben.

Gemäß einem ersten Aspekt ist ein Authentifizierungssystem zum Überprüfen der Echtheit eines Produktes durch Übermittlung einer dem Produkt zugeordneten Produktzeichenkette vorgesehen. Das Authentifizierungssystem umfasst:
- eine Hersteller-Datenbank, die eine in der Produktzeichenkette enthaltene Herstellerkennung einer Herstellerinformation zuordnet;
- eine Produkt-Datenbank, die einen in der Produktzeichenkette enthaltenen Produktcode und der Herstellerkennung produktspezifische Daten zuordnet,
- eine Authentifizierungseinheit, um eine Anfrage mit der Produktzeichenkette von einem Endgerät zu erhalten, um abhängig von der Herstellerkennung und abhängig von dem Produktcode aus der Produkt-Datenbank die dem Produkt zugeordneten produktspezifische Daten zu ermitteln, wobei abhängig von den ermittelten produktspezifischen Daten die Echtheit des Produkts verifizierbar ist.

Ein Vorteil des obigen Authentifizierungssystems besteht darin, dass die Hersteller-Datenbank und die Produkt-Datenbank voneinander separat ausgebildet sind, so dass ein größeres Maß an Sicherheit der in der Produkt-Datenbank vorliegenden produktspezifischen Daten, die zur Verifizierung des Produktes verwendet werden, gewährleistet werden kann.

Weiterhin kann die Authentifizierungseinheit ausgebildet sein, um die produktspezifischen Daten an das Endgerät zu übermitteln, so dass ein Benutzer des Endgeräts anhand von durch die produktspezifische Daten angegebenen Eigenschaften des Produkts durch Vergleichen mit Eigenschaften des der Produktzeichenkette zugeordneten Produkts die Echtheit des Produkts verifizieren kann.

Gemäß einer Ausführungsform kann die Authentifizierungseinheit ausgebildet sein, um die Anfrage mit der Produktzeichenkette in Form einer Produktidentifikationsinformation zu empfangen, wobei die Produktidentifikationsinformation weiterhin Produktdaten umfasst, die Eigenschaften des Produktes beschreiben, wobei die Authentifizierungseinheit weiterhin ausgebildet ist, um abhängig von den Produktdaten und von den produktspezifischen Daten aus der Produkt-Datenbank die Echtheit des Produkts zu verifizieren.

Weiterhin können die Produktdaten Bilddaten und/oder Textdaten und/oder Klangdaten und/oder Positionsdaten und/oder 3D-Modelle umfassen, wobei die Produktdaten Eigenschaften des Produkts angeben, wobei die Eigenschaften des Produkts eine Farbe des Produkts und/oder eine Form des Produkts und/oder eine Größe des Produkts und/oder ein Herstellungsdatum des Produkts umfasst.

Die Authentifizierungseinheit kann ausgebildet sein, um einen Zugriff auf die Hersteller-Datenbank gemäß einer ersten Zugriffsberechtigung und einen Zugriff auf die Produkt-Datenbank gemäß einer zweiten Zugriffsberechtigung zuzulassen.

Die Produkt-Datenbank kann weiterhin dezentral zur Authentifizierungseinheit vorgesehen sein, wobei die Herstellerinformation eine Adresse der dezentralen Produkt-Datenbank, die dem Hersteller des Produkts zugeordnet ist, umfasst,
wobei die Authentifizierungseinheit ausgebildet ist, um mit Hilfe der Herstellerinformation auf die dezentrale Produkt-Datenbank zuzugreifen.

Gemäß einer Ausführungsform kann die Authentifizierungseinheit ausgebildet sein, um beim Zugreifen auf die dezentrale Produkt-Datenbank eine Anfrage mit dem Produktcode zu übermitteln.

Weiterhin kann die Herstellerinformation weiterhin eine Angabe über den Hersteller des Produktes umfassen, wobei die Authentifizierungseinheit ausgebildet ist, um im Wesentlichen gleichzeitig zu dem Zugreifen auf die dezentrale Produkt-Datenbank die Angabe über den Hersteller des Produkts (bei welchem in der Produktdatenbank nachgefragt wird) an das Endgerät zu übermitteln.

Die Authentifizierungseinheit kann ausgebildet sein, um nach dem Empfangen der Produktzeichenkette einen dynamischen Code zu generieren, um eine weitere Produktzeichenkette mit einem abhängig von dem dynamischen Code geänderten Produktcode zu generieren, und die weitere Produktzeichenkette an das Endgerät zu übermitteln, wobei die Authentifizierungseinheit ausgebildet ist, um den geänderten Produktcode in die Produkt-Datenbank zu schreiben, so dass der geänderte Produktcode den Produktdaten des Produktes zugeordnet werden.

Gemäß einer weiteren Ausführungsform kann die Produkt-Datenbank ausgebildet sein, um nach dem Empfangen der Anfrage mit dem Produktcode Historiendaten, die eine Angabe zu einer Zeit der Anfrage und/oder einer Angabe über den Ort, von dem die Anfrage stammt, als Teil der dem Produkt zugeordneten produktspezifischen Daten zu speichern.

Gemäß einem weiteren Aspekt ist ein Authentifizierungsverfahren zum Überprüfen der Echtheit eines Produktes durch Übermittlung einer dem Produkt zugeordneten Produktzeichenkette an eine Authentifizierungseinheit vorgesehen. Das Authentifizierungsverfahren umfasst folgende Schritte:
- Bereitstellen einer Herstellerinformation, die einer in der Produktzeichenkette enthaltenen Herstellerkennung zugeordnet ist, mit Hilfe einer Hersteller-Datenbank;
- Bereitstellen von dem Produkt zugeordneten produktspezifischen Daten, die einem in der Produktzeichenkette enthaltenen Produktcode und der Herstellerkennung zugeordnet sind, mit Hilfe einer Produkt-Datenbank;
- Empfangen einer Anfrage mit der Produktzeichenkette von einem Endgerät, um abhängig von der Herstellerkennung und abhängig von dem Produktcode aus der Produkt-Datenbank die dem Produkt zugeordneten produktspezifischen Daten zu ermitteln, wobei abhängig von den ermittelten produktspezifischen Daten die Echtheit des Produkts verifizierbar ist.

Weiterhin können die produktspezifischen Daten an das Endgerät übermittelt werden, so dass die Echtheit des Produkts für einen Benutzer des Endgeräts anhand von durch die produktspezifische Daten angegebenen Eigenschaften des Produkts durch Vergleichen mit Eigenschaften des der Produktzeichenkette zugeordneten Produkts verifizierbar ist.

Alternativ kann die Anfrage mit der Produktzeichenkette in Form einer Produktidentifikationsinformation empfangen werden, wobei die Produktidentifikationsinformation weiterhin Produktdaten umfasst, die Eigenschaften des Produktes beschreiben, wobei abhängig von den empfangenen Produktdaten und von den produktspezifischen Daten aus der Produkt-Datenbank die Echtheit des Produkts verifiziert wird.

Gemäß einer Ausführungsform kann ein Zugriff auf die Hersteller-Datenbank gemäß einer ersten Zugriffsberechtigung und einen Zugriff auf die Produkt-Datenbank gemäß einer zweiten Zugriffsberechtigung zugelassen werden.

Die Produkt-Datenbank kann dezentral zur Authentifizierungseinheit vorgesehen sein, wobei die Herstellerinformation eine Adresse der dezentralen Produkt-Datenbank, die dem Hersteller des Produkts zugeordnet ist, umfasst, wobei mit Hilfe der Herstellerinformation auf die dezentrale Produkt-Datenbank zugegriffen wird, um die dem Produkt zugeordneten produktspezifische Daten zu ermitteln.

Insbesondere kann beim Zugreifen auf die dezentrale Produkt-Datenbank eine Anfrage mit dem Produktcode übermittelt werden.

Die Herstellerinformation kann weiterhin eine Angabe über den Hersteller des Produktes umfassen, wobei im Wesentlichen gleichzeitig zu dem Zugreifen auf die dezentrale Produkt-Datenbank die Angabe über den Hersteller des Produkts an das Endgerät übermittelt wird.

Gemäß einer Ausführungsform kann nach dem Empfangen der Produktzeichenkette ein dynamischer Code generiert werden, um eine weitere Produktzeichenkette mit einem abhängig von dem dynamischen Code geänderten Produktcode zu generieren, und wobei die weitere Produktzeichenkette an das Endgerät übermittelt wird, wobei der geänderte Produktcode in die Produkt-Datenbank geschrieben wird, so dass der geänderte Produktcode den Produktdaten des Produktes zugeordnet werden kann.

Nach dem Empfangen der Anfrage mit dem Produktcode können Historiendaten, die eine Angabe zu einer Zeit der Anfrage und/oder eine Angabe über den Ort, von dem die Anfrage stammt, als Teil der dem Produkt zugeordneten produktspezifischen Daten gespeichert werden, wobei bei einer nächsten dem Produkt zugeordnete Anfrage die Echtheit des Produkts abhängig von den produktspezifischen Daten mit den Historiendaten verifiziert werden kann.
Bevorzugte Ausführungsformen der Erfindung werden nachfolgend anhand der beigefügten Zeichnungen näher erläutert. Es zeigen:
Figur 1 eine schematische Darstellung eines ersten Authentifizierungssystems für Produkte;
Figur 2 eine schematische Darstellung eines weiteren Authentifizierungssystems für Produkte;
Figur 3 ein Flussdiagramm zur Veranschaulichung des Authentifizierungsverfahrens; und
Figur 4 eine schematische Darstellung eines weiteren Authentifizierungssystems für Produkte.

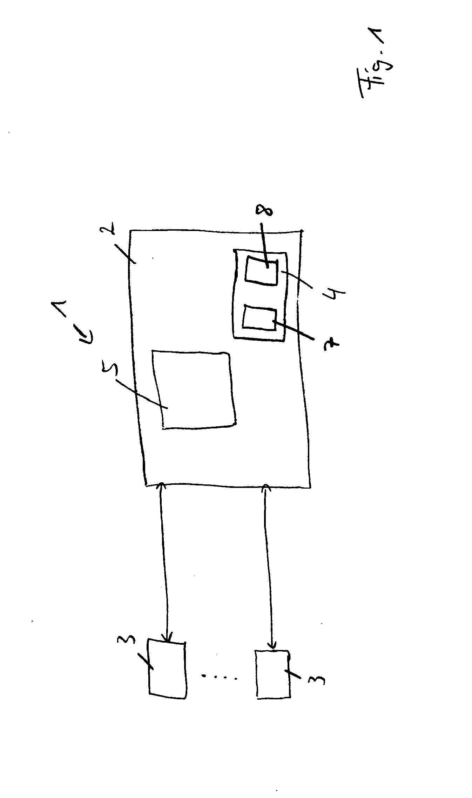

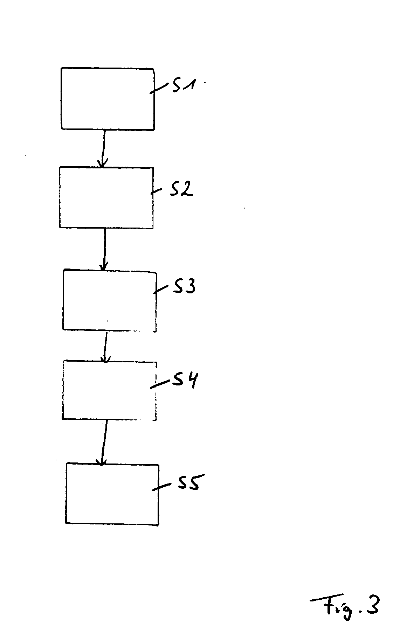

In Figur 1 ist schematisch ein erstes Authentifizierungssystem 1 zur Durchführung eines Verfahrens zum Authentifizieren eines Produkts mithilfe einer an dem Produkt aufgebrachten Identifikationsinformation. Die Funktion des Authentifizierungssystems 1 wird in Verbindung mit dem Flussdiagramm der Fig. 3 erläutert.

Produkte, Packungen und Waren tragen in der Regel eine Produktzeichenkette in Klartext-Form oder in codierter Form (Barcode, EAN-Code), mit der das Produkt gekennzeichnet ist. Im vorliegenden Fall umfasst die Produktzeichenkette eine Herstellerkennung und einen Produktcode (eine Produktkennzeichnung) und optional weiteren Informationen. Die Produktkennzeichnung kann bspw. als Zeitstempel des Produktionsdatums, einer fortlaufenden Nummer und dgl. ausgebildet sein und enthält als essentiellen Bestandteil einen nicht "vorhersehbaren" Code-Teil, der vom Hersteller durch ein nicht nachvollziehbares Codierverfahren generiert wird. Die Produktzeichenkette entspricht einer Identifikationsinformation oder ist Teil davon.

Zusätzlich kann die dem Produkt zugeordnete Identifikationsinformation Produktdaten als Klartext und/oder in geeigneter kodierter Form aufweisen, wie z.B. Markenname, Firma, Konzentration, Packungsgröße, Konfektionsgröße des Produkts, oder beliebige andere das Produkt oder seine Eigenschaften beschreibende Informationen.

Zum Überprüfen eines Produktes entnimmt ein Benutzer dem Produkt bzw. seiner Verpackung die Produktzeichenkette. Die Produktzeichenkette wird als Identifikationsinformation von dem Benutzer mit Hilfe eines geeigneten Endgeräts 3, das eine Benutzerschnittstelle darstellt, an die Authentifizierungseinheit 2 übermittelt (Schritt S1).

Die Authentifizierungseinheit 2 umfasst eine Datenbank 4, die eine Hersteller-Datenbank 7 und eine davon getrennte Produkt-Datenbank 8 umfasst, die Firmen- und Produktdaten speichert. Die Datenbank 4 wird mit Hilfe der Produktzeichenkette abgefragt, so dass die der Produktzeichenkette zugeordneten Firmen- und Produktdaten abgerufen werden können. Die Abfrage erfolgt durch Ermitteln der Herstellerinformation aus der in der Produktzeichenkette enthaltenen Herstellerkennung (Schritt S2). Anschließend wird anhand des in der Produktzeichenkette enthaltenen Produktcodes und der Herstellerinformation eine Abfrage in der Produkt-Datenbank 8 durchgeführt (Schritt S3), um die dem Produkt zugeordneten produktspezifischen Daten abzurufen.

Die Authentifizierungseinheit 2 weist eine Verarbeitungseinheit 5 auf, die anhand der Datenbankabfrage eine Fälschung des angefragten Produktes erkennen kann, wenn die in der Identifikationsinformation enthaltene Produktzeichenkette , die ein bestimmtes Produkt angibt, nicht in der zentralen Datenbank 4 vorhanden ist. Ist die Produktzeichenkette in der zentralen Datenbank 4 einer Firma und/oder einem der Produktzeichenkette zugeordneten Produkt zuordenbar, so kann über einen Vergleich mit der auf dem Produkt angegebenen Herstellerfirma oder einer oder mehreren dem Produkt zugeordneten Produkteigenschaften eine Fälschung festgestellt werden, wenn diese nicht mit denjenigen des realen Produkts, auf dem die Abfrage basiert, übereinstimmen (Schritt S4).

Weiterhin kann eine Fälschung festgestellt werden, wenn aus der Datenbank entnehmbar ist, dass das der Produktzeichenkette zugeordnete Produkt bereits an einen Endkunden verkauft worden ist und somit ein Weiterverkauf ausgeschlossen ist.

Um das Erkennen einer Fälschung durch den obigen Vergleich der Herstellerfirma bzw. der Produkteigenschaften in der Authentifizierungseinheit 2 vornehmen zu können, muss die Identifikationsinformation die Information über die Herstellerfirma und die Produkteigenschaften, die in dem Vergleich überprüft werden, enthalten, so dass durch einen Vergleich in der Authentifizierungseinheit 2 die Fälschung festgestellt werden kann. An das Endgerät 3, von dem die Abfrage durch den Benutzer gestartet worden ist, wird dann abhängig von dem Ergebnis des Vergleichs eine Mitteilung an den Benutzer übermittelt (Schritt S5), dass es sich bei dem zu überprüfenden Produkt um ein Original oder eine Fälschung handelt. Im Fall, dass die Informationen über die Herstellerfirma und die Produkteigenschaften mit denen des der Abfrage zugrunde liegenden Produkts übereinstimmen, wird beispielsweise festgestellt, dass es sich um ein Originalprodukt handelt.

Alternativ können die der zentralen Datenbank 4 entnommenen Informationen über die Herstellerfirma und/oder die Produkteigenschaften zu dem angefragten Produkt an das Endgerät 3 übermittelt werden. Dadurch kann der Benutzer des entsprechenden Endgeräts 3 durch Vergleich der Angabe der Herstellerfirma mit dem auf dem zu überprüfenden Produkt angegebenen Herstellerfirma (Logo, Firmenname und dergleichen) bzw. durch Überprüfen, ob die Produkteigenschaften mit denen des vorliegenden Produkts übereinstimmen, eine Fälschung erkennen. Wenn diese nicht mit der ihm übermittelten Informationen übereinstimmen, kann der Benutzer des Authentifizierungssystems dadurch erkennen, dass das ihm vorliegende Produkt eine Fälschung ist.

Als Endgerät 3 kann jedes Endgerät verwendet werden, bei dem es möglich ist, eine Produktzeichenkette bzw. eine Identifikationsinformation zu erfassen und an die Authentifizierungseinheit 2 zu übermitteln. Beispiele für derartige Endgeräte 3 sind bspw. ein Mobiltelefon, ein Personalcomputer, ein Lesegerät für einen Magnetstreifen oder einen Barcode, in denen beispielsweise die Produktzeichenkette kodiert vorliegen kann, und dergleichen.

Die Übermittlung der Informationen zwischen dem Endgerät 3 und der Authentifizierungseinheit 2 erfolgt über herkömmliche Zugänge, wie z.B. eine Netzwerkverbindung, das Internet, über Funk und dergleichen. Im Prinzip können als Endgeräte alle zum Datenaustausch fähige Geräte vorgesehen werden, die eine Benutzerschnittstelle zur Eingabe der Produktzeichenkette bzw. der Identifikationsinformationen aufweisen. Die Identifikationsinformation kann Informationen über die Herstellerfirma und/oder die Produkteigenschaften nicht nur als Text, sondern auch in Form von Graphiken, Farben, Bilder, Graphikelementen, Koordinaten sowie in Form jeglicher Kombinationen aus diesen Elementen umfassen.

Bei einer Ausführungsform umfasst die Identifikationsinformation als Information über Produkteigenschaften, die an die Authentifizierungseinheit 2 übertragen werden, eine Abbildung des zu überprüfenden Produkts, z.B. als Fotografie. Die Abbildung des zu überprüfenden Produkts kann dann in der Verarbeitungseinheit 5 der Authentifizierungseinheit 2 mit aus der Datenbank 4 bereitgestellten Informationen über Produkteigenschaften in Form einer oder mehrerer Abbildungen des der Produktzeichenkette zugeordneten Produktes durch geeignete Bilderkennungsverfahren, Merkmalsextraktionsverfahren zum Extrahieren von Produktmerkmalen aus der übermittelten Abbildung und/oder geeignete Vergleichsverfahren verglichen werden.

Es kann weiterhin vorgesehen sein, dass sowohl für die Außenverpackung des Produktes als auch für jeden Teil des Packungsinhaltes eine eigene Produktzeichenkette verwendet wird. Auf diese Weise wird sichergestellt, dass die Originalität der Verpackung des Produktes durch einen Verkäufer des Produkts festgestellt werden kann und der Verbraucher noch für jedes einzelne Teil des Packungsinhaltes (z.B. Blister eines Arzneimittels oder jedes einzelnen Schuhs eines Schuhpaares) eine einzigartige und originäre Produktzeichenkette zur Prüfung besitzt. Dies kann vor allen Dingen in Ländern sinnvoll sein, in denen der Abverkauf von Arzneimitteln in der Regel nicht in vollständigen Packungen, sondern in einzelnen Blistern stattfindet.

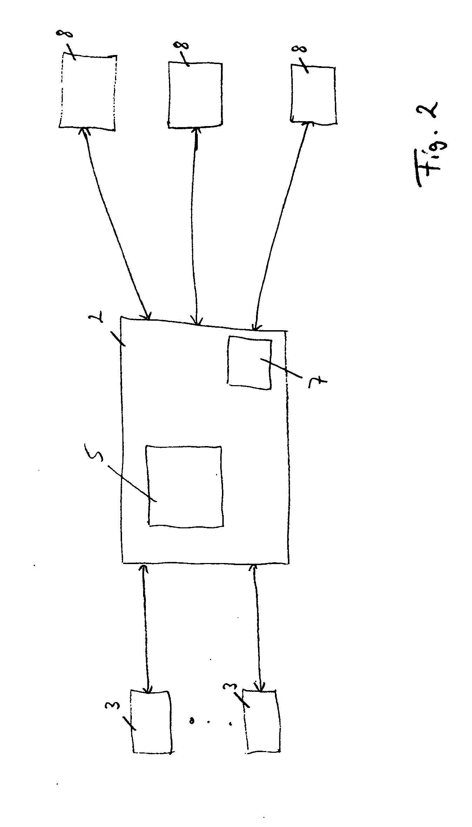

In Figur 2 ist schematisch ein weiteres Authentifizierungssystem dargestellt. Das Authentifizierungssystem der Figur 2 unterscheidet sich von dem der Figur 1 dadurch, dass anstelle einer zentralen Datenbank 4, die alle wesentlichen Informationen für die Überprüfung speichert, eine zentrale Hersteller-Datenbank 7 vorgesehen ist, die lediglich eine Information über die Herstellerfirma und den Ort bzw. Adresse einer externen Produktdatenbank 8 speichert. Dazu ermittelt die Authentifizierungseinheit 2 aus der Produktzeichenkette bzw. aus der Identifikationsinformation mit Hilfe der Hersteller-Datenbank 7 eine Herstellerkennung bzw. einen Herstellercode, und eine entsprechende Produkt-Datenbank-Adresse, die sich an einem Standort der Herstellerfirma oder an einem sonstigen Standort befindet.

Die dezentrale Produkt-Datenbank 8 wird in der Regel von der Herstellerfirma des originären Produkts betrieben und/oder bereitgestellt, so dass die gesamten produktspezifischen Daten zu allen hergestellten Produkten des Herstellers nicht den Einflussbereich der Herstellerfirma verlassen müssen. Die dezentrale Produkt-Datenbank 8 speichert die produktspezifischen Daten, die durch Weiterleitung der Produktkennzeichnung von der Authentifizierungseinheit 2 an den bzw. die durch die Herstellerkennzeichnung bestimmten Standorte der dezentralen Produkt-Datenbanken 8 abrufbar sind und der Authentifizierungseinheit 2 als Antwort bereitgestellt werden können. Liegt in der dezentralen Produkt-Datenbank 8 kein der Produktkennzeichnung zugeordnetes Produkt vor, so wird dieses als Fälschung erkannt, was mit einer entsprechenden Mitteilung der Authentifizierungseinheit 2 mitgeteilt wird. Die Authentifizierungseinheit 2 übermittelt die Information, dass es sich bei dem Produkt um eine Fälschung handelt, weiter an das Endgerät 3 des anfragenden Benutzers.

Liegen in der dezentralen Produkt-Datenbank 8 produktspezifische Daten über das durch die Produktkennzeichnung gekennzeichnete Produkt vor, so werden die zugeordneten produktspezifischen Daten abgerufen und an die Authentifizierungseinheit 2 übermittelt. Die Authentifizierungseinheit 2 überprüft anhand der weiterhin von dem Benutzer übermittelten Identifikationsinformationen und der darin enthaltenen Produktdaten des zu überprüfenden Produktes, ob es sich bei dem Produkt um ein originäres Produkt handelt oder nicht. Ein Ergebnis der Überprüfung wird dem Benutzer über das anfragende Endgerät 3 übermittelt.

Weiterhin kann auch vorgesehen sein, dass die von der dezentralen Produkt-Datenbank 8 bereitgestellten produktspezifischen Daten entweder über die Authentifizierungseinheit 2 oder von der dezentralen Produkt-Datenbank 8 unmittelbar an das Endgerät 3 des Benutzers übermittelt werden. Im letzteren Fall hat dies den Vorteil, dass die Authentifizierungseinheit 2 produktspezifischen Daten eines Produktes nicht erhält, was ein zusätzliches Sicherheitsmerkmal darstellt. Insbesondere kann in diesem Fall die Authentifizierungseinheit 2 keine Rückschlüsse auf die Produktdaten auf Basis der Produktkennzeichnung ziehen.

Weiterhin kann die Authentifizierungseinheit 2 aus der Herstellerkennung den Hersteller ermitteln und im Wesentlichen zeitgleich zur Anfrage an den Standort der dezentralen Produkt-Datenbank 8 des Herstellers mit der Produktzeichenkette die Herstellerfirma dem anfragenden Benutzer über sein Endgerät 3 mitteilen. Damit kann der Benutzer schon vor einer Rückmeldung von der dezentralen Produkt-Datenbank 8 eine erste Überprüfung vornehmen, ob das ihm vorliegende Produkt von der durch die Herstellerfirma angegebenen Firma stammt.

Weiterhin können sowohl in der zentralen Hersteller-Datenbank 7 als auch in den dezentralen Produkt-Datenbanken 8 jede Abfrage des Produkts mit der Identifikationsinformation protokolliert werden, so dass eine Historie des Produkts erstellt werden kann und diese als Historiendaten entsprechend gespeichert werden. Die Historie kann bspw. eines oder mehrere der folgenden Informationen protokollieren, die Zeiten der Abfragen, eine Art der Abfrage, Informationen über die Personen der Abfrage, deren Endgeräte (Art und/oder Identifikationsnummer), Zweck der Anfrage und Standort, von dem aus die Anfrage durchgeführt wurde, (z.B. ermittelbar über die IP-Adresse) usw.. Sowohl am Standort der dezentralen Produkt-Datenbank 8 als auch in der Authentifizierungseinheit 2 kann anhand der jeweils gespeicherten Historiendaten die erneute Anfrage nach dem zu überprüfenden Produkt plausibilisiert werden. Zum Beispiel kann ein Produkt als mögliche Fälschung erkannt werden, dessen letzter Standort in einer Apotheke in Indien registriert wurde, während ein Benutzer in Europa ein Produkt mit einer Produktzeichenfolge überprüfen möchte, die dem Produkt entspricht, dessen letzter Standort in Indien gespeichert wurde. Die Plausibilisierung kann auch anhand der zeitlichen Historie vorgenommen werden, wobei eine große örtliche Entfernung bei Anfragen, die kurz aufeinander erfolgen, auf eine wahrscheinliche Fälschung hinweisen können.

Alternativ können die Historiendaten auch an das Endgerät des Benutzers übermittelt werden, sodass der Benutzer selbst eine Überprüfung auf Plausibilität der Historiendaten bezüglich des ihm vorliegenden Produktes vornehmen kann.

Bei der Erstellung der Produktzeichenkette ist es zur Koordination wichtig, den Abschnitt der Produktzeichenkette, welcher die Herstellerkennung enthält, zu definieren und allgemeingültig festzulegen. Z.B. wird ein erster Abschnitt des Produktzeichenkettenraums für die Herstellerkennung verwendet und ein zweiter Abschnitt der Produktzeichenkette für eine Produktionslinienkennung vorgesehen. Dadurch kann das Problem der Abstimmung zwischen Firmen und einzelnen Produktionslinien vermieden werden. Der erste Abschnitt und der zweite Abschnitt der Produktzeichenkette bilden somit die Firmenkennzeichnung, die eine bestimmte Herstellerfirma und eine Produktionslinie der betreffenden Herstellerfirma eindeutig kennzeichnet. In einem dritten Abschnitt wird eine Produktkennzeichnung vorgesehen, die für die betreffende Produktionslinie bzw. Herstellerfirma das Produkt eindeutig kennzeichnet (z.B. durch Zeitstempel). Die individuellen Produktzeichenketten werden an dem Produkt nach oder während seiner Herstellung angebracht und gleichzeitig in der entsprechenden Produkt-Datenbank 8 gespeichert.

Es kann weiterhin vorgesehen sein, dass die Produktkennzeichenkette einen Abschnitt enthält, der einen dynamischen Code aufweist. Die Produktzeichenkette wird von dem Benutzer an die Authentifizierungseinheit 2 übermittelt. Dort wird eine Abfrage bei der jeweiligen (zentralen oder dezentralen) Datenbank 4, 7, 8 vorgenommen, um die produktspezifischen Daten oder eine Mitteilung über die Echtheit des Produkts zu erhalten. Dem Benutzer wird zusätzlich zu der Mitteilung, ob es sich bei dem Produkt um eine Fälschung oder um ein Original handelt, bzw. zu der Mitteilung über die produktspezifischen Daten entweder eine neue Produktzeichenkette oder ein neuer dynamischer Code übermittelt, die sich von dem zuvor von dem Benutzer verwendeten Produktzeichenkette bzw. dynamischen Code unterscheidet. Die Produktzeichenketten unterscheiden sich also in dem Abschnitt, in dem der dynamisch generierte Code gespeichert ist.

Eine nächste Anfrage bezüglich des Produktes muss nun mit der variierten Produktzeichenkette durchgeführt werden, um zu einer gültigen Authentifizierung des Produktes zu führen, d.h. zu einer Feststellung, dass das Produkt keine Fälschung ist. Wird eine erneute Abfrage mit dem ursprünglichen Produktcode durchgeführt, so wird entweder das Produkt als Fälschung erkannt, oder dem Benutzer mitgeteilt, dass der Produktcode ungültig ist, da bereits eine Abfrage bezüglich des Produktes mit der von ihm angegeben Produktzeichenkette durchgeführt worden ist.

Die dynamische Änderung des Abschnitts des Produktcodes könnte dadurch erfolgen, dass einzelnen Zahlen der Produktzeichenkette angefügt und oder verändert werden, oder aber dass eine neue, sich von der vorangegangenen vollständig unterscheidenden Produktzeichenkette vergeben wird.

Beispielsweise kann die Produktzeichenkette des Produktes in einem Magnetstreifen am Produkt gespeichert sein. Mithilfe eines Magnetstreifen-Schreib-/Lesegeräts kann der Produktcode ausgelesen werden und an die Authentifizierungseinheit 2 übermittelt werden. Dort wird dann der Produktcode in oben beschriebener Weise geändert und an das Endgerät 3 des Benutzers zurück übertragen. Dort kann vorgesehen sein, dass das Magnetstreifen-Schreib-/Lesegeräts den neuen Produktcode auf den Magnetstreifen an dem Produkt überträgt. Beispielsweise kann das Magnetstreifen-Schreib-/Lesegeräts in einem Mobiltelefon oder in einem sonstigen Endgerät 3 vorgesehen sein.

Gemäß einer weiteren Ausführungsform kann vorgesehen sein, dass die Datenbank, die die Herstellerkennung der Adresse der Herstellerfirma bzw. dem Namen der Herstellerfirma zuordnet, öffentlich zugänglich sind bzw. gemäß einer ersten Zugriffsberechtigung nur einem bestimmten Benutzerkreis zugänglich sind. Dadurch kann die Information über die Herstellerfirmen von der Hersteller-Datenbank 7 abrufbar gemacht werden. Dies erhöht die Fälschungssicherheit dadurch, dass ein Benutzer nicht ohne weiteres aufgrund von Namensgleichheit zweier Herstellerfirmen getäuscht werden kann, da es durch die öffentliche Zugänglichkeit der Namen der Herstellerfirmen sowohl einem Benutzer eines Produkts als auch der Herstellerfirma eines Originalprodukts möglich ist, festzustellen, ob eine weitere Firma unter gleichem Namen existiert bzw. registriert ist.

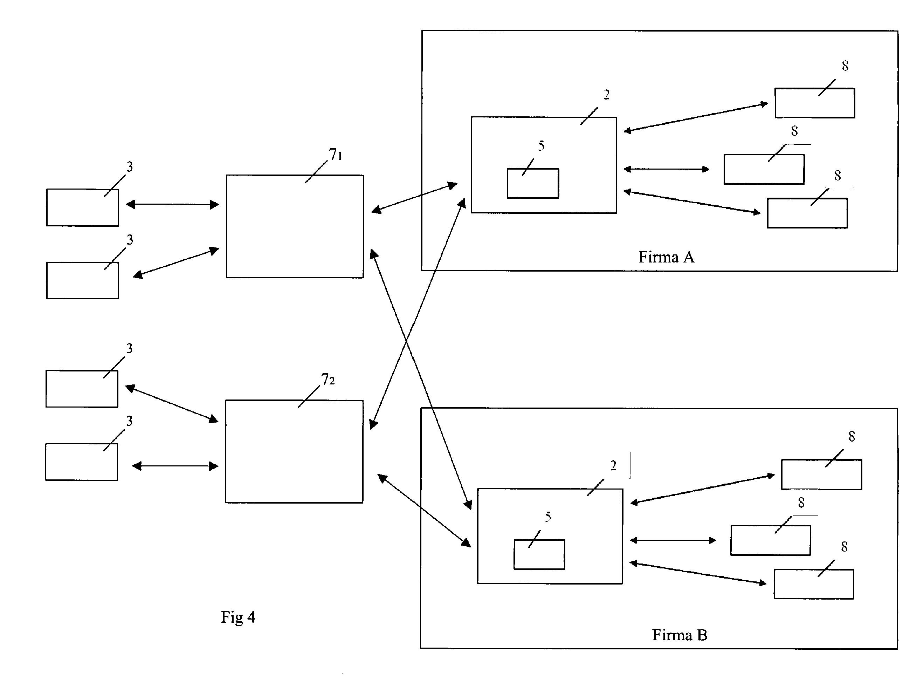

Fig. 4 zeigt eine weitere Ausführungsform eines Authentifizierungssystems für Produkte. Bei der in Fig. 4 gezeigten Ausführungsform ist die Authentifizierungseinheit 2 jeweils herstellerseitig angeordnet, d.h. am Standort oder unter der Kontrolle des (vermeintlichen) Herstellers des zu überprüfenden Produkts. Bei dem Authentifizierungssystem der Fig. 4 sind eine oder mehrere Herstellerdatenbanken 7₁, 7₂ vorgesehen, auf die Endgeräte 3 in entsprechender Weise zugreifen können. Die entsprechende Adresse (Netzwerkadresse) des Herstellers wird in der angefragten Herstellerdatenbank 7₁, 7₂ ermittelt und die Anfrage, die die Produktzeichenkette bzw. die Identifikationsinformation enthält, an die unter der Kontrolle des jeweiligen Herstellers (Firma A, Firma B) befindliche Authentifizierungseinheit 2 weitergeleitet. Die Authentifizierungseinheit 2 weist im Ausführungsbeispiel der Fig. 4 im Unterschied zu den zuvor beschriebenen Ausführungsformen keine eigene Datenbank auf, sondern kann auf ebenfalls unter der Kontrolle des Herstellers stehenden Produktdatenbanken 8 zugreifen, um der Produktzeichenkette bzw. der Identifikationsinformation ein bestimmtes Produkt zuzuordnen.

Abgesehen von der von der Ausführungsform der Fig. 2 verschiedenen Topologie kann das Authentifizierungssystem der Fig. 4 die gleichen Funktionen ausführen wie das Authentifizierungssystem, das in Verbindung mit Fig. 2 beschrieben worden ist. Auch die Abwandlungen und Ausführungsformen, die sich auf Fig. 2 beziehen, lassen sich im Wesentlichen auf die Ausführungsform der Fig. 4 übertragen.

Im Unterschied zu der in Fig. 4 dargestellten Ausführungsform können die Produktdatenbanken 8 auch Teil der Authentifizierungseinheit 2 sein.

Die Produktzeichenkette kann bspw. im Fall, dass das Produkt ein Softwareprogramm darstellt, als Datei oder in sonstiger Weise auf dem Datenträger, auf dem die Software gespeichert ist, hinterlegt sein. Die Produktzeichenkette kann durch das Endgerät 3, das z. B. ein Datenverarbeitungsgerät darstellt, von der Software oder dem Anwender ausgelesen werden. Die Produktzeichenkette ermöglicht es, dass die Software nach Authentifizierung für eine bestimmte Zeit und/oder von Startvorgängen freigeschaltet wird. In einem festgelegten Zeitfenster vor Ablauf der freigeschalteten Zeitspanne wird von der Software automatisch oder manuell durch den Nutzer eine Authentifizierungsabfrage in der Authentifizierungseinheit 2 gestartet. Hierzu liest die Software die Produktzeichenkette aus der Datei aus und übergibt diese der Authentifizierungseinheit 2, indem diese bspw. über das Internet an diese übertragen wird. Die Authentifizierungseinheit 2 überprüft die Produktzeichenkette in der zentralen Datenbank 4 oder anhand der Hersteller-Datenbank 7 und der dezentralen Produkt-Datenbank 8. Ist die Produktzeichenkette in der entsprechenden Datenbank nicht vorhanden, wird dem Endgerät 3 mitgeteilt, dass die benutzte Software nicht verwendet werden kann und die freigeschaltete Zeit wird auf Null gesetzt, sodass die Software nicht mehr weiterverwendet werden kann.

Wird festgestellt, dass die Produktzeichenkette für diese Software in der Datenbank 4 vorhanden ist, wird die Software für einen weiteren vordefinierten Zeitraum und/oder Anzahl von Startvorgängen freigeschaltet. Indem die Authentifizierungseinheit 2 die Produktzeichenkette in einem dynamisch variablen Abschnitt oder vollständig verändert, diese neu generierte Produktzeichenkette in der entsprechenden Datenbank 4, 7, 8 einträgt und diese an das Endgerät 3 des Benutzers überträgt wird der nächste Authentifizierungszyklus vorbereitet. Die lokale Software überschreibt die ursprüngliche Produktzeichenkette mit der neu generierten, sodass die neue Produktzeichenkette bei der nächsten Authentifizierungsprüfung durch den Benutzer als echt erkannt wird.

Möchte der Anwender die Software zukünftig auf einem anderen Endgerät 3 benutzen, installiert er diese auf das neue Endgerät 3 und kopiert die Datei mit der Produktzeichenkette an die entsprechende Stelle auf dem neuen Endgerät 3. Er lässt vom neuen Endgerät 3 aus die Software authentifizieren, diese wird freigeschaltet und die Produktzeichenkette entsprechend obigem Verfahren geändert. Auf dem Vorgängerrechner läuft die freigeschaltete Zeit einfach ab und die Software ist dann danach nicht mehr auf dem Vorgängerrechner nutzbar.

Um zu verhindern, dass der Benutzer die Software durch Kopieren der jeweils neuesten Produktzeichenkette und nachfolgender Authentifizierungen auf mehreren Endgeräten 3 gleichzeitig nutzt, werden bei jedem Authentifizierungsvorgang gerätespezifische Daten über das Endgerät 3 an die Authentifizierungseinheit 2 gemeinsam mit der Produktzeichenkette übertragen. Die Authentifizierungseinheit 2 speichert eine Authentifizierungshistorie für jede Produktzeichenkette mit den gerätespezifischen Daten. Wird hierbei erkannt, dass ein Benutzer die Software gleichzeitig auf mehreren Endgeräten 3 benutzt, kann die aktuelle Produktzeichenkette als ungültig markiert werden. Hierdurch ist eine weitere Nutzung der Software unterbunden, d.h. eine Verlängerung der Nutzung der Software wird bei der nächsten Anfrage verweigert.

## Patentansprüche

1. Authentifizierungssystem (1) zum Überprüfen der Echtheit eines Produktes durch Übermittlung einer dem Produkt zugeordneten Produktzeichenkette, umfassend:
- eine Hersteller-Datenbank (7), die eine in der Produktzeichenkette enthaltene Herstellerkennung einer Herstellerinformation zuordnet;
- eine Produkt-Datenbank (8), die einen in der Produktzeichenkette enthaltenen Produktcode und der Herstellerkennung produktspezifische Daten zuordnet,
- eine Authentifizierungseinheit (2), um eine Anfrage mit der Produktzeichenkette von einem Endgerät (3) zu erhalten, um abhängig von der Herstellerkennung und abhängig von dem Produktcode aus der Produkt-Datenbank die dem Produkt zugeordneten produktspezifische Daten zu ermitteln, wobei abhängig von den ermittelten produktspezifischen Daten die Echtheit des Produkts verifizierbar ist.

2. Authentifizierungssystem (1) nach Anspruch 1, wobei die Authentifizierungseinheit (2) ausgebildet ist, um die produktspezifischen Daten an das Endgerät (3) zu übermitteln, so dass ein Benutzer des Endgeräts (3) anhand von durch die produktspezifische Daten angegebenen Eigenschaften des Produkts durch Vergleichen mit Eigenschaften des der Produktzeichenkette zugeordneten Produkts die Echtheit des Produkts verifizieren kann.

3. Authentifizierungssystem (1) nach Anspruch 1, wobei die Authentifizierungseinheit (2) ausgebildet ist, um die Anfrage mit der Produktzeichenkette in Form einer Produktidentifikationsinformation zu empfangen, wobei die Produktidentifikationsinformation weiterhin Produktdaten umfasst, die Eigenschaften des Produktes beschreiben, wobei die Authentifizierungseinheit (2) weiterhin ausgebildet ist, um abhängig von den Produktdaten und von den produktspezifischen Daten aus der Produkt-Datenbank (8) die Echtheit des Produkts zu verifizieren.

4. Authentifizierungssystem (1) nach Anspruch 3, wobei die Produktdaten Bilddaten und/oder Textdaten und/oder Klangdaten und/oder Positionsdaten umfassen, wobei die Produktdaten Eigenschaften des Produkts angeben, wobei die Eigenschaften des Produkts eine Farbe des Produkts und/oder eine Form des Produkts und/oder eine Größe des Produkts und/oder eine Herstellungsdatum des Produkts umfasst.

5. Authentifizierungssystem (1) nach einem der Ansprüche 1 bis 4, wobei die Authentifizierungseinheit (2) ausgebildet ist, um einen Zugriff auf die Hersteller-Datenbank (7) gemäß einer ersten Zugriffsberechtigung und einen Zugriff auf die Produkt-Datenbank (8) gemäß einer zweiten Zugriffsberechtigung zuzulassen.

6. Authentifizierungssystem nach einem der Ansprüche 1 bis 5, wobei die Produkt-Datenbank (8) dezentral zur Authentifizierungseinheit (2) vorgesehen ist, wobei die Herstellerinformation eine Adresse der dezentralen Produkt-Datenbank (8), die dem Hersteller des Produkts zugeordnet ist, umfasst,
wobei die Authentifizierungseinheit (2) ausgebildet ist, um mit Hilfe der Herstellerinformation auf die dezentrale Produkt-Datenbank (8) zuzugreifen.

7. Authentifizierungssystem (1) nach Anspruch 6, wobei die Authentifizierungseinheit (2) ausgebildet ist, um beim Zugreifen auf die dezentrale Produkt-Datenbank (8) eine Anfrage mit dem Produktcode zu übermitteln.

8. Authentifizierungssystem (1) nach Anspruch 6 oder 7, wobei die Herstellerinformation weiterhin eine Angabe über den Hersteller des Produktes umfasst, wobei die Authentifizierungseinheit (2) ausgebildet ist, um im Wesentlichen gleichzeitig zu dem Zugreifen auf die dezentrale Produkt-Datenbank (8) die Angabe über den Hersteller des Produkts an das Endgerät (3) zu übermitteln.

9. Authentifizierungssystem (1) nach einem der Ansprüche 1 bis 8, wobei die Authentifizierungseinheit (2) ausgebildet ist, um nach dem Empfangen der Produktzeichenkette einen dynamischen Code zu generieren, um eine weitere Produktzeichenkette mit einem abhängig von dem dynamischen Code geänderten Produktcode zu generieren, und die weitere Produktzeichenkette an das Endgerät (3) zu übermitteln, wobei die Authentifizierungseinheit (2) ausgebildet ist, um den geänderten Produktcode in die Produkt-Datenbank (8) zu schreiben, so dass der geänderte Produktcode den Produktdaten des Produktes zugeordnet werden.

10. Authentifizierungssystem (1) nach einem der Ansprüche 1 bis 9, wobei die Produkt-Datenbank (8) ausgebildet ist, um nach dem Empfangen der Anfrage mit dem Produktcode Historiendaten, die eine Angabe zu einer Zeit der Anfrage und/oder einen Angabe über den Ort, von dem die Anfrage stammt, als Teil der dem Produkt zugeordneten produktspezifischen Daten zu speichern.

11. Authentifizierungsverfahren zum Überprüfen der Echtheit eines Produktes durch Übermittlung einer dem Produkt zugeordneten Produktzeichenkette an eine Authentifizierungseinheit (2), mit folgenden Schritten:
- Bereitstellen einer Herstellerinformation, die einer in der Produktzeichenkette enthaltenen Herstellerkennung zugeordnet ist, mit Hilfe einer Hersteller-Datenbank;
- Bereitstellen von dem Produkt zugeordneten produktspezifischen Daten, die einem in dem Produktzeichenkette enthaltenen Produktcode und der Herstellerkennung zugeordnet sind, mit Hilfe einer Produkt-Datenbank (8);
- Empfangen einer Anfrage mit der Produktzeichenkette von einem Endgerät (3), um abhängig von der Herstellerkennung und abhängig von dem Produktcode aus der Produkt-Datenbank (8) die dem Produkt zugeordneten produktspezifische Daten zu ermitteln, wobei abhängig von den ermittelten produktspezifischen Daten die Echtheit des Produkts verifizierbar ist.

12. Authentifizierungsverfahren nach Anspruch 11, wobei die produktspezifischen Daten an das Endgerät (3) übermittelt werden, so dass die Echtheit des Produkts für einen Benutzer des Endgeräts (3) anhand von durch die produktspezifische Daten angegebenen Eigenschaften des Produkts durch Vergleichen mit Eigenschaften des der Produktzeichenkette zugeordneten Produkts verifizierbar ist.

13. Authentifizierungsverfahren nach Anspruch 11, wobei die Anfrage mit der Produktzeichenkette in Form einer Produktidentifikationsinformation empfangen wird, wobei die Produktidentifikationsinformation weiterhin Produktdaten umfasst, die Eigenschaften des Produktes beschreiben, wobei abhängig von den empfangenen Produktdaten und von den produktspezifischen Daten aus der Produkt-Datenbank (8) die Echtheit des Produkts verifiziert wird.

14. Authentifizierungsverfahren nach einem der Ansprüche 11 bis 13, wobei ein Zugriff auf die Hersteller-Datenbank (7) gemäß einer ersten Zugriffsberechtigung und einen Zugriff auf die Produkt-Datenbank (8) gemäß einer zweiten Zugriffsberechtigung zugelassen wird.

15. Authentifizierungsverfahren nach einem der Ansprüche 11 bis 14, wobei die Produkt-Datenbank (8) dezentral zur Authentifizierungseinheit (2) vorgesehen ist, wobei die Herstellerinformation eine Adresse der dezentralen Produkt-Datenbank (8), die dem Hersteller des Produkts zugeordnet ist, umfasst,
wobei mit Hilfe der Herstellerinformation auf die dezentrale Produkt-Datenbank (8) zugegriffen wird, um die dem Produkt zugeordneten produktspezifische Daten zu ermitteln.

16. Authentifizierungsverfahren nach Anspruch 15, wobei beim Zugreifen auf die dezentrale Produkt-Datenbank (8) eine Anfrage mit dem Produktcode übermittelt wird.

17. Authentifizierungsverfahren nach Anspruch 15 oder 16, wobei die Herstellerinformation weiterhin eine Angabe über den Hersteller des Produktes umfasst, wobei im Wesentlichen gleichzeitig zu dem Zugreifen auf die dezentrale Produkt-Datenbank (8) die Angabe über den Hersteller des Produkts an das Endgerät (3) übermittelt wird.

18. Authentifizierungsverfahren nach einem der Ansprüche 11 bis 17, wobei nach dem Empfangen der Produktzeichenkette ein dynamischer Code generiert wird, um eine weitere Produktzeichenkette mit einem abhängig von dem dynamischen Code geänderten Produktcode zu generieren, und wobei die weitere Produktzeichenkette an das Endgerät übermittelt wird, wobei der geänderte Produktcode in die Produkt-Datenbank (8) geschrieben wird, so dass der geänderte Produktcode den Produktdaten des Produktes zugeordnet werden.

19. Authentifizierungsverfahren nach einem der Ansprüche 11 bis 18, wobei nach dem Empfangen der Anfrage mit dem Produktcode Historiendaten, die eine Angabe zu einer Zeit der Anfrage und/oder einen Angabe über den Ort, von dem die Anfrage stammt, als Teil der dem Produkt zugeordneten produktspezifischen Daten gespeichert werden, wobei bei einer nächsten dem Produkt zugeordnete Anfrage die Echtheit des Produkts abhängig von den produktspezifischen Daten mit den Historiendaten verifiziert werden.
